# EUROPEAN PATENT APPLICATION

(11) **EP 4 462 333 A1**
(43) Date of publication of application: **13.11.2024**
(21) Application number: 24150457.0
(22) Date of filing: 04.01.2024
(51) Int. Cl.: G06Q 20/18, G07F 7/06, G07F 9/00

(54) **PRODUCT DISPENSING UNIT FOR SELF-SERVICE EXCHANGING OF A LIQUEFIED PETROLEUM GAS CYLINDER AND METHOD THEREOF**

(30) Priority: 12.05.2023 PT 2023118650; 16.12.2023 PT 2023119150
(71) Applicant: Secret Blaze - Technologies, Lda., 3200-220 Lousã (PT)
(72) Inventor: Pereira Ferreira, Hélder José, 3200-220 Lousã (PT); de Almeida Marques, Alcides Manuel, 3200-220 Lousã (PT)
(74) Representative: Patentree

(57) **Abstract**

Product dispensing unit comprising a plurality of compartments, each compartment being arranged for storing a liquefied petroleum gas cylinder, each compartment comprising a door for closing the respective compartment, said each door being secured with a respective lock and wherein the gas cylinder stored in each compartment is at least partially visible when said door is closed, and a system comprising an actuator, for each lock, for locking and unlocking a respective lock, and an electronic data processor configured for carrying out the steps of storing and self-service exchange of empty gas cylinder for full gas cylinder, and vice versa. A system comprising the said product dispensing unit and method is also disclosed.

## Description

### TECHNICAL FIELD

The present disclosure relates to a product dispensing unit for collection of products with returnable packaging using automatic vending machine - smart dispensers, in particular liquefied petroleum gas cylinder.

### BACKGROUND

Document CN110148252A discloses a bottled gas self-service sale device and its management methods. Bottled gas self-service sale device includes control cabinet, full bottle cabinet group and empty bottle cabinet group. Completely bottle cabinet group includes the full bottle cabinet body for storing full bottle, and each completely bottle cabinet body includes full bottle cabinet body cabinet door and the electric control unlocking device for unlocking the full bottle cabinet body cabinet door, and each completely bottle cabinet body cabinet door, which is bonded with, expires bottle cabinet body uniquely corresponding two-dimensional code paster with this. Empty bottle cabinet group includes the empty bottle cabinet body for storing empty bottle, and each empty bottle cabinet body includes empty bottle cabinet body cabinet door and the electric control unlocking device for unlocking empty bottle cabinet body cabinet door, and each empty bottle cabinet body cabinet door is bonded with and the unique corresponding two-dimensional code paster of the empty bottle cabinet body. Bottled gas self-service sale device disclosed by the invention and its management method do not need a large amount of artificial long-time stationary point maintenances, are effectively reduced O&M cost, meet self-oriented, convenient consumption scaling trend.

Document WO2019238147 - discloses a device for storing and self-service exchange of empty propane-butane bottles for full propane-butane bottles wherein the device is composed of the power supply unit and at least two pairs, piled one on top of the other and standing side by side, aligned and tightly interconnected to each other, lockable cabinets and for bottles with identical plan views and with at least two different heights, wherein each lockable cabinet for bottles is equipped with the door with the electronically controlled lock of the door and the internal control element to evaluate size and weight of the bottle, wherein the part of the device is constituted by the operation control module, integrating the payment terminal, electronically coupled, either with wire or wireless connections, to the electronically controlled lock of the door and to the internal control element of each lockable cabinet for bottles.

These facts are disclosed in order to illustrate the technical problem addressed by the present disclosure.

### GENERAL DESCRIPTION

The present disclosure details the methodology and apparatus to perform self-service exchanging of a liquefied petroleum gas cylinder for a product dispensing unit comprising a plurality of compartments.

The present disclosure encompasses a set of innovations dedicated to the purchase and collection of products with returnable packaging using automatic vending machine - smart dispensers. This group of innovations include:
The use of a smartphone to fully control a vending machine with returning packaging;
A minimalist and intuitive design of the vending machine;
Product recognition based on computer vision/artificial intelligence using a smartphone, and without the need of sensors (weighing scale) or cameras in the dispenser;
An energy-free system based on ultra-low power solutions.

This disclosure is designed to purchase and collect products with returnable packaging using automatic dispensers, also known as vending machines.

The primary application, which will be described in detail, entails the purchase of Liquefied Petroleum Gas (LPG) cylinders, the return of the empty cylinder and the collection of the product previously purchased. Considering that in this business area the cylinder is returned in most transactions, the system presents a unique mechanism to support its return and collection. Another differentiating factor is the fact that all interactions with the customer (both for the purchase process and the delivery of the LPG cylinders) are carried out digitally, using a smartphone application.

It is disclosed a product dispensing unit comprising a plurality of compartments, also presented in this disclosure as lockers, each compartment being arranged for storing a liquefied petroleum gas cylinder, each compartment comprising a door for closing the respective compartment, said each door being secured with a respective lock and wherein the gas cylinder stored in each compartment is at least partially visible when said door is closed, and a system comprising an actuator, for each lock, for locking and unlocking a respective lock, and an electronic data processor configured for carrying out the steps of: receiving an indication that a user wishes to return a gas cylinder; selecting an empty compartment; driving an actuator to unlock the lock of selected compartment for a single access for receiving the gas cylinder; receiving an indication that the selected compartment was locked by user; receiving from a mobile terminal of the user a captured digital image of the product dispensing unit, said captured digital image including: the selected compartment for recognising the deposited gas cylinder, and a part of the product dispensing unit for image pattern recognition of a previously known state of the product dispensing unit; comparing the image of the selected compartment with previously acquired image to recognise the deposited gas cylinder; if recognised, outputting a confirmation that the gas cylinder is stored in the selected compartment.

In an embodiment, the captured digital image of the product dispensing unit comprises a part of the product dispensing unit, wherein the part of the product dispensing unit comprises a plurality of compartments, wherein said electronic data processor is further configured for carrying out the steps of: comparing the image of the part of the product dispensing unit with the state of the product dispensing unit regarding gas cylinders stored in compartments to recognise that the state of the product dispensing unit is the same except for the deposited gas cylinder; if recognised, updating the state of the product dispensing unit with the gas cylinder stored in selected compartment, and storing the updated state of the product dispensing unit as a current known state of the product dispensing unit.

In an embodiment, said electronic data processor is further configured for carrying out the steps of: selecting a compartment comprising a full liquefied petroleum gas cylinder; driving an actuator to unlock the lock of selected compartment for a single access for taking out the liquefied petroleum gas cylinder; updating the state of the product dispensing unit with the selected compartment as an empty compartment.

In an embodiment, said part of the product dispensing unit for image pattern recognition comprises a plurality of light indicators and the electronic data processor is further configured for carrying out the step of driving the plurality of light indicators to show a unique light pattern.

In an embodiment, the plurality of light indicators can be a plurality of Light Emitting Diodes or a Liquid Crystal Display or an Organic Light Emitting Diode Display.

In an embodiment, comparing the image of the selected compartment with previously acquired image to recognise the deposited gas cylinder is a machine-learning image pattern recognition.

In an embodiment, the captured digital image can be a single static picture captured by mobile terminal of the user and/or a selected frame from a video captured by the mobile terminal of the user.

In an embodiment, said electronic data processor is further configured for carrying out the step of guiding the user to point the mobile terminal of the user towards the product dispensing unit and to display by the mobile terminal a mask shaped as a gas cylinder or several gas cylinders for image capture by terminal of the user.

It is also disclosed a system for self-service exchanging of a liquefied petroleum gas cylinder comprising a product dispensing unit according to any of the previous embodiments.

It is also disclosed a computer-implemented method for operating a system for self-service exchanging of a liquefied petroleum gas cylinder for a product dispensing unit comprising a plurality of compartments, each compartment being arranged for storing a liquefied petroleum gas cylinder, each compartment comprising a door for closing the respective compartment, said each door being secured with a respective lock and wherein the gas cylinder stored in each compartment is at least partially visible when said door is closed, and an actuator, for each lock, for locking and unlocking a respective lock, and comprising the steps of: receiving an indication that a user wishes to return a gas cylinder; selecting an empty compartment; driving an actuator to unlock the lock of selected compartment for a single access for receiving the gas cylinder; receiving an indication that the selected compartment was locked by user; receiving from a mobile terminal of the user a captured digital image of the product dispensing unit, said captured digital image including: the selected compartment for recognising the deposited gas cylinder, and a part of the product dispensing unit for image pattern recognition of a previously known state of the product dispensing unit; comparing the image of the selected compartment with previously acquired images to recognise the deposited gas cylinder; if recognised, outputting a confirmation that the gas cylinder is stored in the selected compartment.

In an embodiment, said computer-implemented method is further configured for carrying out the steps of: comparing the image of the part of the product dispensing unit with the state of the product dispensing unit regarding gas cylinders stored in compartments to recognise that the state of the product dispensing unit is the same except for the deposited gas cylinder; if recognised, updating the state of the product dispensing unit with the gas cylinder stored in selected compartment, and storing the updated state of the product dispensing unit as a current known state of the product dispensing unit.

In an embodiment, said computer-implemented method further comprises the steps of: selecting a compartment comprising a full liquefied petroleum gas cylinder; driving an actuator to unlock the lock of selected compartment for a single access for taking out the liquefied petroleum gas cylinder; updating the state of the product dispensing unit with the selected compartment as an empty compartment.

In an embodiment, said computer-implemented method comparing the image of the selected compartment with previously acquired image to recognise the deposited gas cylinder by a machine-learning image pattern recognition.

In an embodiment, said computer-implemented method further comprises the steps of guiding the user to point the mobile terminal of the user towards the product dispensing unit and to display by the mobile terminal a mask shaped as a gas cylinder or several gas cylinders for image capture by terminal of the user.

It is also disclosed a non-transitory storage media including program instructions for implementing a computer-based method for self-service exchanging of a liquefied petroleum gas cylinder for a product dispensing unit, the program instructions including instructions executable by a data processor to carry out the method of any of the previous embodiments.

### BRIEF DESCRIPTION OF THE DRAWINGS

The following figures provide preferred embodiments for illustrating the disclosure and should not be seen as limiting the scope of invention.
**Figure 1****:** Schematic representation of a system context diagram.
**Figure 2****:** Schematic representation of an embodiment of 5-locker dispenser technical design views, wherein (a) is a top view; (b) is a front view; (c) is a right view.
**Figure 3****:** Schematic representation of LPG cylinder purchase, return and collect mechanism.
**Figure 4****:** Schematic representation of a control modules and wiring diagram for a 20-locker dispenser.

### DETAILED DESCRIPTION

It is disclosed a product dispensing unit comprising a plurality of compartments, each compartment being arranged for storing a liquefied petroleum gas cylinder, each compartment comprising a door for closing the respective compartment, said each door being secured with a respective lock and wherein the gas cylinder stored in each compartment is at least partially visible when said door is closed, and a system comprising an actuator, for each lock, for locking and unlocking a respective lock, and an electronic data processor configured for carrying out the steps of storing and self-service exchange of empty gas cylinder for full gas cylinder, and vice versa. A system comprising the said product dispensing unit and method is also disclosed.

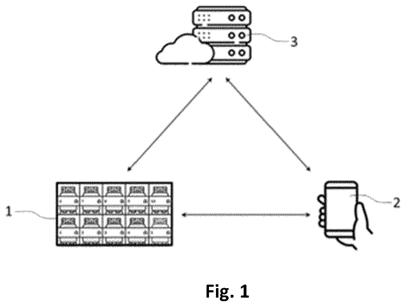

The following pertains to system description. In this context, as shown in **Figure 1****,** the system can comprise:
1- LPG cylinder dispenser;
2- Mobile application;
3- Centralized management system hosted on an internet-accessible server.

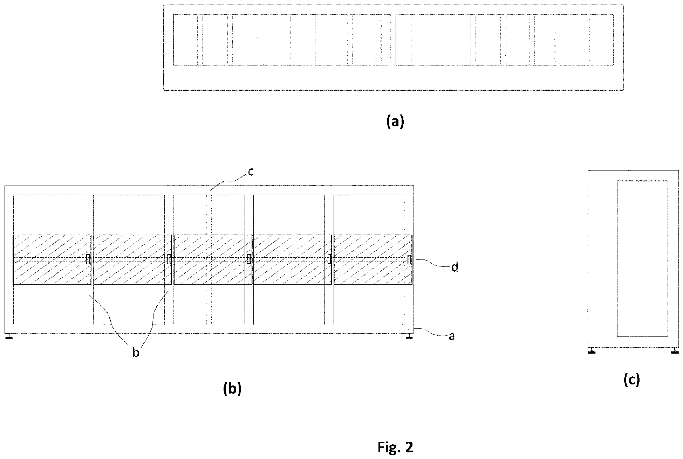

The following pertains to LPG cylinder dispenser. The LPG cylinder dispenser consists of a set of lockers, each of which can hold a single cylinder. The dispenser is modular, in the sense that extra sets of lockers (extra modules) can be added to the dispenser. **Figure 2** shows a technical drawing of a module with **5** lockers (each module can have different number of lockers). A dispenser can comprise of a single module or two or more modules grouped together: a dispenser with **10** lockers will comprise of two modules, one on the top of the other, and a dispenser with **20** lockers includes four modules, two by two grouped back-to-back. These are two typical configurations.

Each locker is identified by a unique number and has a lock, which is opened by an electrical control system (microcontroller). Each locker also has a sensor that indicates whether the door is open or closed.

Each dispenser has its own management system (microcontroller) which acts on the locks of all the lockers in a dispenser, monitors the status of the doors (open or closed) and communicates with the centralized management system hosted on an internet-accessible server. The microcontroller can communicate via Bluetooth, wireless, GSM or cable networks or other internet communication protocol. The default communication approach is the following: The communication between the dispenser and the server are done using a Bluetooth connection with the mobile application (in the smartphone), that relay that communication to the server; the same occurs with the server communication, that are send to the mobile application (in the smartphone) and then to the dispenser over Bluetooth connection. The mobile application works as proxy between the dispenser and the server. This method is central for a low energy consumption approach, using Bluetooth Low Energy (Bluetooth LE) and Ultra-Low Power hardware.

The dispenser can be equipped with a battery and may also be equipped with solar panels (or another form of electricity generation), so that it can be installed without an energy connection. It may be also equipped with an electric connection, in a context in which the client does not want a standalone solution.

The dispenser does not need a digital interface or point of sale (POS) to interact with the user/customer. All interaction with the customer is carried out via the mobile application, which is described below.

The following pertains to mobile applications. The mobile application allows the users to interact with the system. The user profiles supported are:
Customers - customers who are going to buy LPG cylinder and may or may not return an empty cylinder;
Transporter - the person responsible for picking up a pre-paid order and delivering it to the destination address;
Operator - a person who is at the point of sale and is responsible for delivering LPG cylinders to customers who don't have or don't want to use the mobile app;
Distributor - the person responsible for collecting empty cylinders and restocking the dispenser with filled cylinders.

The mobile application displays different features, based on the needs of each user profile.

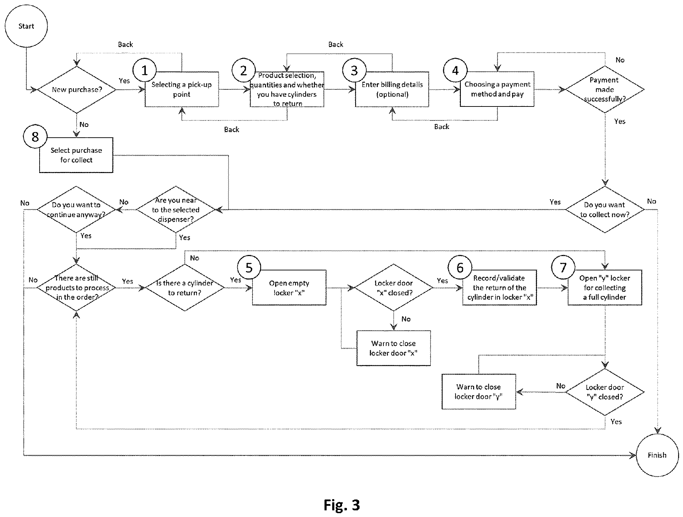

The following pertains to customer and transporter profile. The mechanism for buying, returning and collecting gas cylinders is detailed in **Figure 3****.** The mechanism described by this algorithm has the following initial condition: in full capacity, the dispenser always presents an empty locker.

The mobile application allows customers to select the pick-up point of their choice, the items to buy (e.g., type and brand of LPG cylinder), check their availability at that pick-up point, indicate if they will return any empty cylinder, make the purchase and, finally, pay for them. The payment options are the most used electronic payment methods in the region, for instance: credit card, PayPal, Google Wallet, Apple Pay, MBway, or other supported (steps 1 to 4).

The system can manage the delivery of several cylinder types (brands, sizes and LPG type). Based on the type of cylinder bought, the application manages which lockers should be used to return the empty cylinder and which one will deliver the new one (step 5 and 7).

The purchase process can be carried out near the dispenser or remotely (e.g., at the customer's home). After completing the purchase, in order to collect the LPG cylinder, the customer needs to go to the pick-up point where the chosen dispenser is located. The purchase and collection can be carried out by different persons, allowing one to make the purchase and the other to collect and deliver to the first person's home or to a designated address. This allows the solution to be integrated with home delivery services (such as Uber or Glovo, for example). This functionality is made available through a unique purchase code which is shared with those who are carrying out the collection and delivery (step 8).

The validation of the returned cylinder is an important step in the process because it must recognize the cylinder's brand, size, and type. The return of the cylinder validation (step 6) is done using a photo/video taken from the mobile application and it is validated using computer imaging processing algorithms and artificial intelligence to ensure that the returned LPG cylinder respects the accepted types in that dispenser, and that it has been rightly placed in the designated locker. More detail about this feature is given in "Return cylinder validation" chapter.

The following pertains to operator profile. At points of sale supported by a seller, the operator (seller) is responsible for the sale, for receiving the empty cylinders and delivering the filled ones to the customer. He uses the mobile app to open the lockers, which in this case acts as a "key" and it is the operator's responsibility to validate the delivery of the empty cylinder and the filled one, as well as to process the payment. This mode of operation is particularly important for customers who do not wish to use the mobile application. In this situation, the payment is made outside the mobile app, and it will be solely used as a key to open the locker with the objective of returning the empty cylinder (optional) and to collect the filled one.
The following pertains to distributor profile. The Distributor is responsible for collecting the empty cylinders and replenishing the dispenser with filled ones. To do this, this user uses the mobile application in "distribution" mode. In this mode, all the doors of the lockers with empty cylinders will open with a single command so that the empty cylinders can be removed, and the filled ones can be inserted. After replacing the cylinders and closing all the doors, the user must indicate/validate which type of cylinders are loaded into each of the lockers. To accomplish that, the Distributor, using the mobile application take one or several photos of the dispenser; the application guides the user, using masks and argued reality, to capture the right dispenser modules, the system analyses the photos with Artificial Intelligence and Image Processing to update de dispenser status and Distributor verifies it. The pictures are also a dispenser refill prove.

The following pertains to centralized management system. The centralized management system is a software application hosted on an internet-accessible server, which allows the orchestration of the various requests for the purchase, payment, return and collection of gas cylinders. This computer application, among other functions (e.g., customer management, dispenser network management), maintains data structures that store the status of all dispensers managed by the system, namely knowing which products are in which locker (there are different types of LPG cylinders) and inherently knowing whether the locker is filled or not and whether the locker door is open or closed.

The following pertains to frame design. The locker structure has been designed to store and provide LPG cylinders. To this end, the lockers cannot have a closed frame, allowing the air to circulate freely. In addition, this type of locker has the following characteristics: each locker is able to hold one and only one cylinder; it presents the same level of security as existing traditional solutions; it includes space to incorporate electronic and electromechanical components; it minimizes the consumption of building materials (metal) and it has a unique, seamless, and minimalist design.

To meet these characteristics, the technical drawing of a 5-locker module is shown in **Figure 2****.** In it we highlight:
The front of the module can have a frame made up of 10x4 cm profiles (a). Every 32 cm, there are vertical profiles, also measuring 10x4 cm (b).
The frame is hollow, allowing the electronics to be housed in the upper profile (c), with access covers on the underside;
The vertical profiles hold the electromechanical locks (d);
The locks have a drawer accessible from the back of the profile;
There are no horizontal elements or mesh separating the various lockers. The lockers are separated only by the depth of the frame and the vertical profiles;
The doors open to the left so that cylinders can be removed with the right hand.

A dispenser can comprise of one or several modules grouped together. Two typical configurations are: a dispenser with 10 lockers (two modules, one on the top of the other) and a dispenser with 20 lockers (four modules, two by two join back-to-back).

This design can be adapted to various situations:
The modules can have a different number of lockers, for example 6. When several modules are joined together, the dispenser will be constituted by a multiple of that number, for example: 12 or 24.
Optionally, to ease of transportation, the modules can be dismantled.
Optionally, with the objective of reducing the cost and quantity of the building material, this design can be used to produce non-modular dispensers, for example 20 lockers in which the intermediate profiles are single.

The following pertains to return cylinder validation. The return of an empty cylinder is validated with Artificial Intelligence and image processing algorithms. To accomplish this, after verifying that the door of the requested locker is rightly closed, the mobile application will request the user to take a photo, so it can validate if the user has in fact placed a cylinder inside the correct locker. This photo is taken using the mobile application where, with the overlay of a visual mask on top of the camera picture/image/feed, it guides the user to correctly photograph the dispenser with a perspective that allows for the cylinder identification (brand, size and gas type); the algorithm also identifies the number of the locker using Optical Caracter Recognition (OCR).

The following pertains to advanced return cylinder validation, in particular context image. Alternatively, the system can also use information of the lockers close to the selected locker (for returning the cylinder) to improve resilience of the return confirmation process. By guiding the user, again using a mask, to capture not just the selected locker but also the lockers right beside it, it can not only validate that a cylinder was correctly deposited in that selected locker but also retrieve the state, and identity the surrounding lockers. The system can then cross reference that information with the current known state of the dispenser. This additional context information enables our system to mitigate some potential strategies that could be used to trick the system.

The following pertains to context video. This approach follows the same principle as the previous ones, but instead of a photo, it accesses the mobile phone camera and guides the user to point it towards the dispenser and perform a few seconds (3-10) of parallax movement. The application will use a combination of user interface and augmented reality elements to guide the user during the dispenser evaluation process. During the capture period, the application will either capture a sequence of multiple images or video. The captured media will be processed by computer vision algorithms and our own models, first to access the status of as many lockers as possible, focusing on the one used by the user to return the cylinder, and secondly to identify the model and brand of each cylinder in the dispenser. The result of the dispenser assessment, as previously, will be cross referenced against the current known state of the dispenser, both to perform a more robust confirmation of the user returned cylinder and to detect any anomalies in the dispenser. This approach can be more complex in terms of the implementation of the dispenser assessment process but provides a much higher degree of confidence. By using an isolated and automatic capture channel, capturing and cross-referencing redundant information, the system is more resilient to tampering.

The following pertains to digital code validation. In this approach, the dispenser needs to be equipped with a mechanism that can be easily integrated into the dispenser frame, which is able to present a coded value and that can be easily captured by the smartphone camera even under direct sun light. The mechanism can either consist on a set of LEDs integrated into the frame or a high contrast E-Ink Display. The mechanism will be able to present different (low range) values encoded in binary form such as on and off LEDs in the LED sequence or black and white squares in the E-Ink Display.

After the user has inserted the empty cylinder in the locker and closed the door, as previously, the mobile application will ask and guide the user to capture an image of the dispenser to validate that the user actually delivered the empty cylinder. During this process, the server will generate a value, transmitted to the dispenser using an encrypted channel, that will be displayed using either the LED sequence or the E-Ink Display solutions, described above, while the user is taking the photograph. As previously, the captured image is sent to the server to be processed by computer vision algorithms and our own models to validate the user delivery and, in this approach, also validate the code displayed by the dispenser. The validation of the presented code presents an extra layer of security with which we can reliably validate the user location and time of the captured media.

The present disclosure can be used in conjunction with each of the previous ones to provide a simple, but very effective layer of tampering protection.

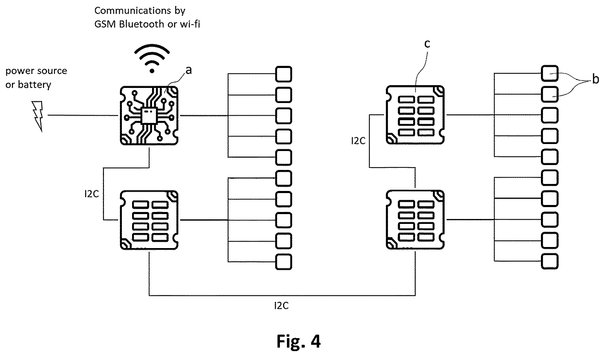

The following pertains to control modules. As explained above, the system can be modular, and several modules can be grouped together to make a dispenser in accordance with the customer's requirements and the legislation in force. The control mechanisms within each of the modules take a structured approach in order to support the modularity of the system. Each dispenser must have a primary module and can have one or more secondary modules. **Figure 4** shows the wiring diagram for the electronics of a 20-locker dispenser.

The primary module (a) is responsible for managing the dispenser. This module's electronics include the main board, with the microcontroller, communications (Bluetooth, wireless, GSM, cable network), communication with the other modules (using the I2C protocol) and the battery. This board is also responsible for opening the module's electronic locks (b) and monitoring their status. In this version, this board can control up to 8 locks. Depending on the option, this module can also be equipped with a solar panel or a power transformer and a cable to connect it to the grid. The main function of the secondary modules' electronics (c) is to control and analyse the status of the modules' electronic locks (b), which is able to control also up to 8 to 32 locks depending on the version of this board. This board also allows communication with other boards via the I2C protocol.

In an embodiment, it is possible to use the same technology in different use cases, for instance, sell charcoal or firewood. Is it also possible to use the same technology with adaptations in the frame layout, for instance, to deliver food in returnable food container and to accept the food container returns and validation.

In an embodiment, when capturing a video or a photograph or set of photographs, the user is guided by augmented reality. Augmented reality adds a layer of complementary information, making it possible to schematically represent additional information on the real image and update this information in real time, making it possible to identify the structure of the dispenser, as well as identifying the locker numbers and which locker the empty bottle has been placed in and where the full bottle can be taken.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable. The following claims further set out particular embodiments of the disclosure.

## Claims

1. Product dispensing unit comprising a plurality of compartments, each compartment being arranged for storing a liquefied petroleum gas cylinder, each compartment comprising a door for closing the respective compartment, said each door being secured with a respective lock and wherein the gas cylinder stored in each compartment is at least partially visible when said door is closed, and a system comprising an actuator, for each lock, for locking and unlocking a respective lock, and an electronic data processor configured for carrying out the steps of:
receiving an indication that a user wishes to return a gas cylinder;
selecting an empty compartment;
driving an actuator to unlock the lock of selected compartment for a single access for receiving the gas cylinder;
receiving an indication that the selected compartment was locked by user;
receiving from a mobile terminal of the user a captured digital image of the product dispensing unit, said captured digital image including:
the selected compartment for recognising the deposited gas cylinder, and
a part of the product dispensing unit for image pattern recognition of a previously known state of the product dispensing unit;
comparing the image of the selected compartment with previously acquired image to recognise the deposited gas cylinder;
if recognised, outputting a confirmation that the gas cylinder is stored in the selected compartment.

2. Product dispensing unit according to the previous claim, wherein the captured digital image of the product dispensing unit comprises a part of the product dispensing unit, wherein the part of the product dispensing unit comprises a plurality of compartments, wherein said electronic data processor is further configured for carrying out the steps of:
comparing the image of the part of the product dispensing unit with the state of the product dispensing unit regarding gas cylinders stored in compartments to recognise that the state of the product dispensing unit is the same except for the deposited gas cylinder;
if recognised, updating the state of the product dispensing unit with the gas cylinder stored in selected compartment, and storing the updated state of the product dispensing unit as a current known state of the product dispensing unit.

3. Product dispensing unit according to any to previous claims, wherein said electronic data processor is further configured for carrying out the steps of:
selecting a compartment comprising a full liquefied petroleum gas cylinder;
driving an actuator to unlock the lock of selected compartment for a single access for taking out the liquefied petroleum gas cylinder;
updating the state of the product dispensing unit with the selected compartment as an empty compartment.

4. Product dispensing unit according to any of the previous claims wherein the said part of the product dispensing unit for image pattern recognition comprises a plurality of light indicators and the electronic data processor is further configured for carrying out the step of driving the plurality of light indicators to show a unique light pattern.

5. Product dispensing unit according to the previous claim, wherein the plurality of light indicators is a plurality of Light Emitting Diodes or a Liquid Crystal Display or an Organic Light Emitting Diode Display.

6. Product dispensing unit according to any of the previous claims wherein comparing the image of the selected compartment with previously acquired image to recognise the deposited gas cylinder is a machine-learning image pattern recognition.

7. Product dispensing unit according to any of the previous claims wherein the captured digital image is a single static picture captured by mobile terminal of the user and/or a selected frame from a video captured by the mobile terminal of the user.

8. Product dispensing unit according to the previous claim, wherein said electronic data processor is further configured for carrying out the step of guiding the user to point the mobile terminal of the user towards the product dispensing unit and to display by the mobile terminal a mask shaped as a gas cylinder or several gas cylinders for image capture by terminal of the user.

9. A system for self-service exchanging of a liquefied petroleum gas cylinder comprising a product dispensing unit according to any of the previous claims.

10. Computer-implemented method for operating a system for self-service exchanging of a liquefied petroleum gas cylinder for a product dispensing unit comprising a plurality of compartments, each compartment being arranged for storing a liquefied petroleum gas cylinder, each compartment comprising a door for closing the respective compartment, said each door being secured with a respective lock and wherein the gas cylinder stored in each compartment is at least partially visible when said door is closed, and an actuator, for each lock, for locking and unlocking a respective lock, and comprising the steps of:
receiving an indication that a user wishes to return a gas cylinder;
selecting an empty compartment;
driving an actuator to unlock the lock of selected compartment for a single access for receiving the gas cylinder;
receiving an indication that the selected compartment was locked by user;
receiving from a mobile terminal of the user a captured digital image of the product dispensing unit, said captured digital image including:
the selected compartment for recognising the deposited gas cylinder, and
a part of the product dispensing unit for image pattern recognition of a previously known state of the product dispensing unit;
comparing the image of the selected compartment with previously acquired images to recognise the deposited gas cylinder;
if recognised, outputting a confirmation that the gas cylinder is stored in the selected compartment.

11. Computer-implemented method according to the previous claim, wherein the captured digital image of the product dispensing unit comprises a part of the product dispensing unit, wherein the part of the product dispensing unit comprises a plurality of compartments, wherein said computer-implemented method is further configured for carrying out the steps of:
comparing the image of the part of the product dispensing unit with the state of the product dispensing unit regarding gas cylinders stored in compartments to recognise that the state of the product dispensing unit is the same except for the deposited gas cylinder;
if recognised, updating the state of the product dispensing unit with the gas cylinder stored in selected compartment, and storing the updated state of the product dispensing unit as a current known state of the product dispensing unit.

12. Computer-implemented method according to any of the previous claims 10 - 11, further comprising the steps of:
selecting a compartment comprising a full liquefied petroleum gas cylinder;
driving an actuator to unlock the lock of selected compartment for a single access for taking out the liquefied petroleum gas cylinder;
updating the state of the product dispensing unit with the selected compartment as an empty compartment.

13. Computer-implemented method according to any of the previous claims 10 - 12, wherein comparing the image of the selected compartment with previously acquired image to recognise the deposited gas cylinder is a machine-learning image pattern recognition.

14. Computer-implemented method according to any of the previous claims 10 - 13, further comprising the steps of guiding the user to point the mobile terminal of the user towards the product dispensing unit and to display by the mobile terminal a mask shaped as a gas cylinder or several gas cylinders for image capture by terminal of the user.

15. Non-transitory storage media including program instructions for implementing a computer-based method for self-service exchanging of a liquefied petroleum gas cylinder for a product dispensing unit, the program instructions including instructions executable by a data processor to carry out the method of any of the claims 10-14.
